Europäisches Patentamt

European Patent Office

Office européen des brevets

(11) Veröffentlichungsnummer : **0 048 239**
**B1**

(12) **EUROPÄISCHE PATENTSCHRIFT**

(45) Veröffentlichungstag der Patentschrift :
13.06.84

(21) Anmeldenummer : **81890145.6**

(22) Anmeldetag : **27.08.81**

(51) Int. Cl.³ : **B 01 D 11/04// C02F1/26, C11B1/10**

(54) Zweiphasengegenstromapparat.

(30) Priorität : **11.09.80 AT 4568/80**

(43) Veröffentlichungstag der Anmeldung :
**24.03.82 Patentblatt 82/12**

(45) Bekanntmachung des Hinweises auf die Patenterteilung : **13.06.84 Patentblatt 84/24**

(84) Benannte Vertragsstaaten :
**BE CH DE FR GB IT LI NL**

(56) Entgegenhaltungen :
**DE-A- 2 164 477**
**DE-A- 2 557 327**
**DE-A- 2 846 225**
**DE-A- 3 020 450**
**DE-C-   555 806**
**GB-A- 1 324 361**
**US-A- 2 665 196**
**CHEMICAL ENGINEERING PROGRESS, Band 76, Nr. 12, Dezember 1980 New York L. STEINER et al. "Agitated Liquid/Liquid Extraction" Seiten 60 bis 62**

(73) Patentinhaber : **VOEST-ALPINE Aktiengesellschaft Werksgelände**
**A-4010 Linz (AT)**

(72) Erfinder : **Marr, Rolf, Prof. Dipl.-Ing. Dr. techn.**
**Eschengasse 5**
**A-8043 Graz (AT)**
Erfinder : **Moser, Franz, Prof. Dipl.-Ing. Dr. techn.**
**Krachelberg 12**
**A-8302 Nestelbach (AT)**
Erfinder : **Husung, Gerrit, Dipl.-Ing. Dr. techn.**
**Birchbaum 50**
**A-8160 Naas (AT)**

(74) Vertreter : **Wolfram, Gustav, Dipl.-Ing.**
**Schwindgasse 7 P.O. Box 205**
**A-1041 Wien (AT)**

## Beschreibung

Die Erfindung betrifft einen Zweiphasengegenstromapparat mit einer Kolonne, die abwechselnd angeordnete Mischzonen und Ruhezonen enthält, wobei in den Ruhezonen Leitwände vorhanden sind, von denen sich verengende Durchflußräume mit entgegengesetzter Strömungsrichtung gebildet werden. Solche Apparate werden vorzugsweise bei der Flüssig-Flüssig-Extraktion eingesetzt, beispielsweise zur Reinigung phenolhaltiger Abwässer oder verunreinigter Öle.

Bei der Flüssig-Flüssig-Extraktion müssen zwei nicht mischbare Flüssigkeiten, welche die beiden Phasen bilden, miteinander in Kontakt gebracht werden, um eine Grenzfläche für den Übergang der zu extrahierenden Substanz von einer Phase in die andere zu schaffen. Gewöhnlich wird dabei eine Phase dispergiert und im Gegenstrom zu der anderen geführt. Häufige Koaleszenz und Redispergierung fördern den Stoffübergang. Mischungsvorgänge längs der Kolonne verringern den Stoffübergang, da sie eine Verkleinerung der dafür maßgebenden Konzentrationsdifferenz bewirken. Die Vermischungseffekte nehmen im allgemeinen mit zunehmendem Kolonnendurchmesser zu.

Aus der DE-C-899 495 ist bekannt, in Extraktionskolonnen zwischen Abschnitten mit mechanischer Energiezufuhr — beispielsweise durch Rührer — Einbauten anzubringen, die als Absetzzonen fungieren und eine Herabsetzung der Längsvermischung bewirken. Durch solche Einbauten wird meist auch die Koaleszenz der dispergierten Phase gefördert. Die Einbauten haben den Nachteil, durch geringe freie Querschnitte oder sonstige Behinderungen der Axialdurchströmung des Apparates dessen erforderlichen Querschnitt und damit das Apparate-Volumen erheblich zu erhöhen. Mit dem vergrößerten Apparatedurchmesser werden im allgemeinen jedoch die unerwünschten Vermischungseffekte wiederum vergrößert.

In der US-A-2 000 606 ist ein Flüssigkeitsextraktionsapparat mit Misch- und Ruhezonen beschrieben, bei welchem in den Ruhezonen jeweils ein Hohlkonus angeordnet ist, wobei der untere, mit der zylindrischen Wand des Apparates verbundene Rand des Konus den größeren Durchmesser aufweist. Zwischen einer zentralen Welle, auf welcher Rührorgane angebracht sind, und dem oberen Rand des Konus bleibt nur ein enger, ringförmiger Spalt für die aufwärtsströmende Phase. An der Innen- und Außenfläche des Konus sind Fortsätze in Form vertikaler Bleche angebracht, welche die Räume zwischen Welle und Konus sowie zwischen Konus und Apparatewand unterteilen. Die schwerere, absteigende Flüssigkeitsphase sammelt sich in Absetzräumen, welche jeweils vom untersten Teil jedes Konus und der Wand des Apparates begrenzt werden und strömt von dort durch enge, gekrümmte Röhrchen in die nächstuntere Mischzone. Der in der US-A-2 000 606 beschriebene Apparat hat somit gleichfalls die bereits voranstehend erläuterten Nachteile. Die Gefahr von Verschmutzungen und Verstopfungen ist insbesonders infolge des geringen Querschnitts der gekrümmten Röhrchen hoch. Bei höheren Durchsätzen und dementsprechend intensiver Phasenmischung kommt es überdies zu stärkerer Emulsionsbildung, mit der Folge, daß die Teilchen der leichteren Phase in dem bekannten Apparat nicht mehr aufsteigen.

Die Erfindung stellt sich die Aufgabe, die geschilderten Nachteile und Schwierigkeiten zu überwinden und einen Zweiphasengegenstromapparat zu schaffen, der bei einem Minimum an Längsvermischung möglichst unbehindert axial durchströmt wird und einen wesentlich geringeren Querschnitt und kürzere Bauhöhe aufweist als ein herkömmlicher Apparat bzw. eine Kolonne gleicher Extraktionsleistung.

Die gestellte Aufgabe wird bei einem Zweiphasengegenstromapparat der eingangs definierten Art dadurch gelöst, daß für jede der beiden Phasen eine Mehrzahl von zur Längsachse des Apparates geneigten Leitwänden über den Querschnitt der Kolonne vorgesehen ist, um eine Mehrzahl sich in Strömungsrichtung der jeweiligen Phase verengende, direkt in die angrenzende Mischzone mündende Kanäle zu bilden.

Durch die hydrodynamische Wirkung dieser in Strömungsrichtung konvergierenden Kanäle werden die beiden Phasen nach Dispersion richtungsabhängig unterschiedlich aufgeteilt, so daß auf Beruhigungszonen von herkömmlicher Ausführung mit geringen Strömungsgeschwindigkeiten und Rückströmzonen, die den Durchsatz weiter vermindern, verzichtet werden kann und darüber hinaus eine günstigstenfalls vollständige Koaleszenz der dispergierten Phase erzielt wird, wobei sich das Niveau der Koaleszenzschicht von selbst einstellt. Die Mehrzahl von Durchflußkanälen über den Querschnitt der Kolonne hat den Vorteil, daß die beiden Phasen beim Austritt aus der Ruhezone direkt in die angrenzende Mischzone wieder optimal dispergiert werden.

Zweckmäßig sind gemeinsame Wände der Kanäle von zur Kolonnenlängsachse abwechselnd entgegengesetzt geneigten, im wesentlichen ebenen Blechen gebildet.

Die so geschaffenen parallelen Kanäle erstrecken sich über die gesamte Länge der Sekanten bei einem kreisförmigen Kolonnenquerschnitt. Dadurch wird die Verteilung der Materialströme über den Kolonnenquerschnitt verbessert und die Längsvermischung weiter herabgesetzt. Eine vollständige Nutzung des gesamten Kolonnenquerschnittes wird ermöglicht; die Kolonneneinbauten sind konstruktiv einfach aufgebaut und können leicht eingebaut werden.

Gemäß einer anderen vorteilhaften Ausführungsform sind die gemeinsamen Wände der Kanäle von kegelstumpfförmig gestalteten Blechen gebildet, die mit abwechselnd entgegengesetzter Neigung koaxial zur Kolonnenlängsachse angeordnet sind. Die so geschaffenen Kanäle sind kreisförmig mit zur Kolonnenlängsachse hin abnehmendem Durchmesser, wodurch die Strömung in Umfangsrichtung gleichmäßiger gestaltet wird.

Bei manchen Anwendungsfällen müssen für die beiden Phasen Stoffkombinationen eingesetzt werden, bei denen die disperse Phase nur zögernd koalesziert. In einem solchen Fall sind als weitere Ausgestaltung der Erfindung in den Kanälen der Kolonneneinbauten, durch welche die disperse Phase strömt, vorzugsweise koaleszenzfördernde Einsätze angeordnet.

Bei Verwendung eines Rührers in den Mischzonen zwischen den Kolonneneinbauten kann es zu einer ungünstigen Beeinflussung der Strömung aus den bzw. in die Einbauten und damit zu einer Störung des Niveaus der Koaleszenzschicht kommen. Zweckmäßig sind daher an den Eintrittsbzw. Austrittsöffnungen der Kanäle Leitbleche angebracht. Durch diese Leitbleche bzw. Ausgleichseinrichtungen wird gleichzeitig eine Versteifung bzw. Unterstützung der Kolonneneinbauten bewirkt.

Nach wieder einer anderen Ausführungsform weisen die Wände der Kolonneneinbauten zickzackförmige Einprägungen oder Rippen auf, die an ihren Scheitelpunkten miteinander verbunden sind. Auf diese Weise wird eine Erhöhung der mechanischen Festigkeit erzielt, die lichte Weite der Austrittsöffnungen der einzelnen Kanäle wird gleichzeitig festgelegt und konstant gehalten.

Es ist weiters von Vorteil, wenn von einer der beiden Phasen durchströmte Kanäle der Kolonneneinbauten durch Ausgleichskanäle miteinander verbunden sind. Diese Ausgleichskanäle bewirken einen Druckausgleich zwischen den betreffenden Kanälen, wodurch sich bei der dispersen Phase ein einheitliches Niveau der Koaleszenzbereiche einstellen kann.

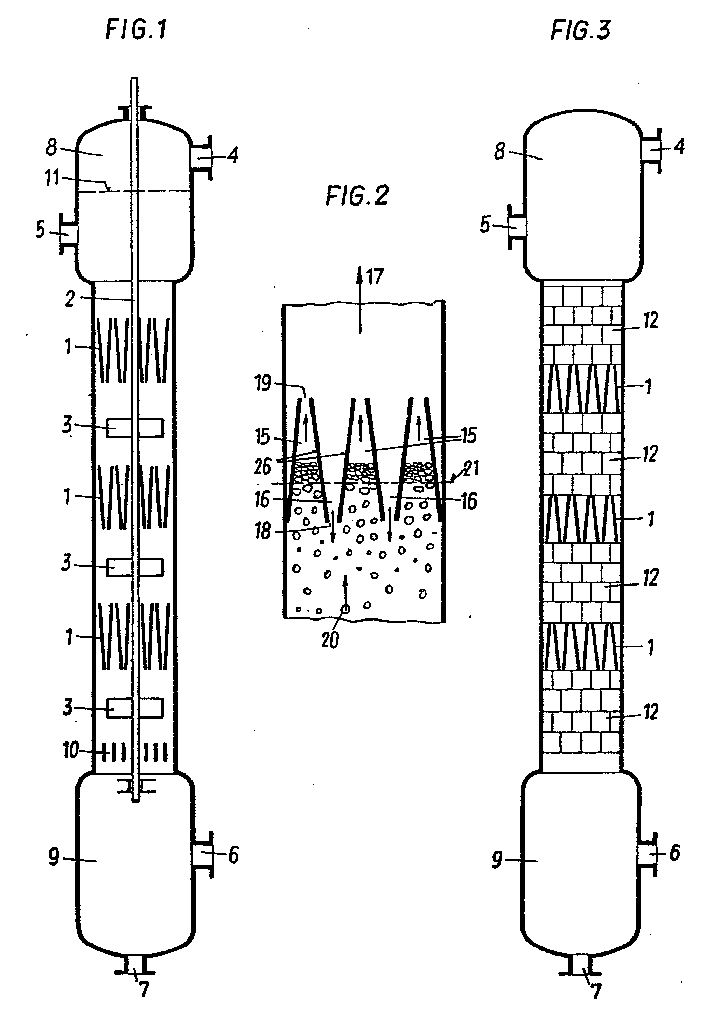

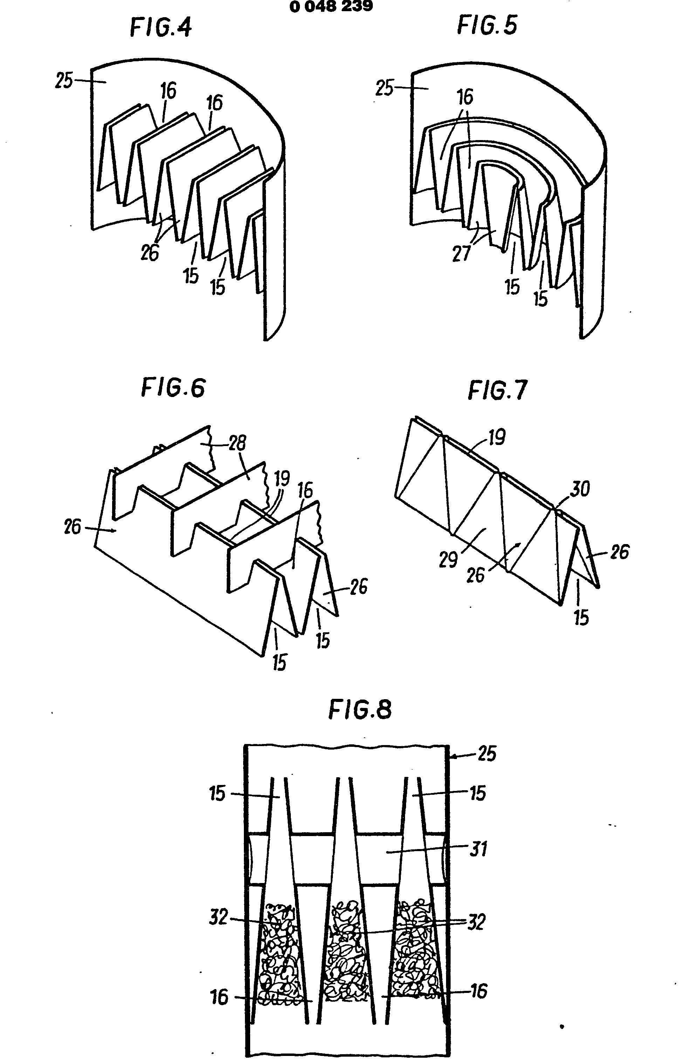

In der Zeichnung wird die Erfindung anhand einiger Ausführungsformen näher erläutert ; es zeigen Fig. 1 einen erfindungsgemäßen Zweiphasengegenstromapparat mit Kolonneneinbauten in schematischer Darstellung, Fig. 2 einen Schnitt durch einen Kolonneneinbau gemäß Fig. 1 mit aufsteigender disperser Phase in vereinfachter und vergrößerter Darstellung, Fig. 3 eine andere Variante eines Zweiphasengegenstromapparates, Fig. 4 eine schematische räumliche Ansicht des Kolonneneinbaus gemäß Fig. 1 und Fig. 3, Fig. 5 eine andere Ausführungsform eines Kolonneneinbaus im Schrägriß, Fig. 6 einen Ausschnitt aus einer weiteren Variante eines Kolonneneinbaus in schematischer räumlicher Darstellung, Fig. 7 zwei Wände eines Kolonneneinbaues wieder einer anderen Ausführungsform im Schrägriß und Fig. 8 eine schematische Schnittansicht einer letzten Ausführungsform eines Kolonneneinbaus mit einem Ausgleichskanal.

Fig. 1 zeigt eine Kolonne mit abwechselnd entlang ihrer Längsachse angeordneten Kolonneneinbauten 1 und Rührelementen 3, die durch eine gemeinsame Welle 2 in Drehung versetzt werden. An ihrem oberen Ende bildet die Kolonne einen Kolonnenkopf 8 mit einem Zufuhrstutzen 5 für die Phase größerer Dichte und einem Ableitstutzen 4 für die Phase geringerer Dichte ; an ihrem unteren Ende erweitert sich die Kolonne zu einem Kolonnenboden 9 mit einem Zufuhrstutzen 6 für die Phase geringerer Dichte und einem Ableitungsstutzen 7 für die Phase größerer Dichte. Kolonnenkopf 8 und Kolonnenboden 9 weisen einen größeren Durchmesser als die Kolonne selbst auf, um die Strömungsgeschwindigkeiten in axialer Richtung herabzusetzen. Um eine Drehbewegung der Flüssigkeit im Kolonnenboden 9 zu vermeiden, ist ein Beruhigungsgitter 10 eingebaut.

Soll nun beispielsweise phenolhaltigem Abwasser mittels Benzol das Phenol entzogen werden, wird das phenolhaltige Abwasser als Phase größerer Dichte der Kolonne durch den Stutzen 5 zugeführt. Das Benzol läuft durch den Stutzen 6 von unten zu, steigt als Phase geringerer Dichte nach oben, wird mehrmals durch die Rührer 3 dispergiert, koalesziert mehrmals an den Einbauten 1 und verläßt schließlich nach vollständiger Trennung von der wässerigen Phase die Kolonne durch den Stutzen 4. Da die leichtere Phase in der schweren dispergiert wird, ist im Kolonnenkopf 8 das Niveau der Phasengrenzfläche 11 zwischen Zulauf 5 und Ablauf 4 einzustellen. Auf dem Weg durch die Kolonne strömt das Benzol im Gegenstrom zum Abwasser, wobei es von Einbau zu Einbau eine höhere Konzentration an Phenol erreicht und gleichzeitig mit Abwasser immer höheren Phenolgehaltes in Kontakt kommt. Das gereinigte Wasser verläßt die Kolonne durch den Stutzen 7. Das phenolhaltige Benzol wird außerhalb der Kolonne (nicht dargestellt) vom Phenol befreit und der Kolonne durch den Stutzen 6 wieder zugeführt.

In Fig. 2 sind mit 15 aufwärts konvergierende Kanäle und mit 16 abwärts konvergierende Kanäle bezeichnet. Unter der Annahme, daß die Phase geringerer Dichte die disperse und die Phase größerer Dichte die kontinuierliche ist, und daß ferner der Richtungspfeil 17 der Richtung der Erd- oder einer Zentrifugalbeschleunigung entgegengesetzt ist, wird im folgenden die Wirkungsweise dieser Einbauten erläutert :

Die kontinuierliche Phase durchströmt die sich verengenden Kanäle 16 von oben nach unten, wobei die Ausströmgeschwindigkeit $v_1$ an den Öffnungen 18 größer sein muß als die Steiggeschwindigkeit $v_3$ eines Tropfens 20 der dispersen Phase, wodurch ein Eindringen der Tropfen in die Kanäle 16 verhindert wird. Den Tropfen bleibt daher nur der Weg in die Kanäle 15, in denen die leichtere Phase bei ausreichend kleinem Querschnitt der Austrittsöffnungen 19 aufgestaut wird. Dabei kommt es zur Koaleszenz der Tropfen. Das Niveau 21 der Koaleszenzfläche (des Koaleszenzbereiches) stellt sich abhängig von der Durchströmungsbelastung der Kolonne unter Erhaltung des hydrodynamischen Gleichgewichtes von selbst ein.

Bei erhöhtem Zustrom von Tropfen 20 sinkt das Niveau 21 der Koaleszenzfläche ab. Damit verringert sich jedoch die mittlere Dichte des Flüssigkeitsinhaltes der Kanäle 15 und die durch die statische Druckdifferenz festgelegte Ausströmgeschwindigkeit $v_2$ aus den Austrittsöffnungen 19 steigt dementsprechend. Auf diese Weise bleibt der Zustand hydrodynamischen Gleichgewichtes erhalten.

Weite und Form der Öffnungen 18, 19 ist den hydrodynamischen Bedingungen anzupassen. Insbesondere ist es unter bestimmten Bedingungen möglich, die Austrittsgeschwindigkeiten so weit zu steigern, daß infolge der dabei auftretenden Turbulenzen ohne Zufuhr mechanischer Energie — etwa mittels Rührorganen — bereits die Dispersion der beiden Fluidumströme bewirkt wird. Gemäß Fig. 3 enthält eine derartige Kolonne in den Mischzonen dispersionsfördernde Packungen 12 anstelle von Rührelementen.

Die gemeinsamen Wände der konvergierenden Strömungskanäle 15, 16 werden gemäß Fig. 4 durch ebene Trennbleche 26 gebildet, die abwechselnd entgegengesetzt zur Kolonnenlängsachse geneigt an der Wand 25 der Kolonne befestigt sind. Die Wände können aber auch gemäß Fig. 5 von kegelstumpfförmig gestalteten Blechen 27 gebildet sein, die mit abwechselnd entgegengesetzter Neigung koaxial zur Kolonnenlängsachse angeordnet und an der Kolonnenwand 25 befestigt sind.

Um ein Abdrängen der austretenden koaleszierten Phase zu verhindern, sind ebene Trennbleche 26 gemäß Fig. 6 an den Austrittsöffnungen 19 der Kanäle 15 für die koaleszierte Phase mit quer zu den Austrittsöffnungen verlaufenden Leitblechen 28 versehen. Übergreifen die Leitbleche mehrere Öffnungen 19, bewirken sie auch eine Versteifung der Einbauten. Derartige Leitbleche können natürlich auch in Kombination mit den Kolonneneinbauten nach Fig. 5 verwendet werden.

Eine Versteifung der ebenen Trennbleche 26 kann nach Fig. 7 weiters mittels zickzackförmiger Einprägungen oder Rippen 29 bewerkstelligt werden. Ein Strömungskanal 15 wird durch zwei Bleche mit einander zugekehrten Einprägungen gebildet, welche einander an ihren Scheitelpunkten 30 berühren bzw. an diesen Stellen miteinander verbunden sind. Neben einer Erhöhung der mechanischen Festigkeit wird dadurch auch die Weite der Austrittsöffnungen 19 festgelegt.

Das Abdrängen der austretenden koaleszierten Phase durch Rotation der zuströmenden Flüssigkeit oder andere Störungen kann aber auch, wie in Fig. 8 dargestellt, durch Verbindung der Strömungskanäle 15 für die koalzeszierende Phase mittels Ausgleichskanälen 31 verhindert werden. Auf diese Weise wird in den Kanälen 15 ein einheitliches Niveau 21 der Koaleszenzflächen (siehe Fig. 2) eingestellt. Derartige Ausgleichskanäle 31 können für Kolonneneinbauten nach Fig. 4 oder nach Fig. 5 mit dem gleichen Erfolg verwendet werden.

In Fig. 8 sind koaleszenzfördernde Einsätze 32 dargestellt, die im unteren Teil der Kanäle 15 für die disperse Phase angeordnet sind. Diese Einsätze 32 bestehen aus einem koaleszenzfördernden Geflecht oder aus Füllkörpern, beispielsweise aus Metall in Drahtform, Glas oder Kunststoff. Diese Einsätze 32 können die Kanäle 15, ja sogar die Ausgleichskanäle 31 auch zur Gänze ausfüllen.

## Ansprüche

1. Zweiphasengegenstromapparat mit einer Kolonne, die abwechselnd angeordnete Mischzonen (3, 12) und Ruhezonen enthält, wobei in den Ruhezonen Leitwände vorhanden sind, von denen sich verengende Durchflußräume mit entgegengesetzter Strömungsrichtung gebildet werden, dadurch gekennzeichnet, daß für jede der beiden Phasen eine Mehrzahl von zur Längsachse des Apparates geneigten Leitwänden (26, 27) über den Querschnitt der Kolonne vorgesehen ist, im eine Mehrzahl sich in Strömungsrichtung der jeweiligen Phase verengende, direkt in die angrenzende Mischzone mündende Kanäle (15, 16) zu bilden.

2. Zweiphasengegenstromapparat nach Anspruch 1, dadurch gekennzeichnet, daß gemeinsame Wände der Kanäle (15, 16) von zur Kolonnenlängsachse abwechselnd entgegengesetzt geneigten, im wesentlichen ebenen Blechen (26) gebildet sind.

3. Zweiphasengegenstromapparat nach Anspruch 1, dadurch gekennzeichnet, daß die Mehrzahl der Kanäle (15, 16) von einer Mehrzahl kegelstumpfförmig gestalteter Bleche (27) gebildet ist, die mit abwechselnd entgegengesetzter Neigung koaxial zur Kolonnenlängsachse angeordnet sind.

4. Zweiphasengegenstromapparat nach den Ansprüchen 1 bis 3, dadurch gekennzeichnet, daß in den Kanälen (15) der Kolonneneinbauten (1), durch welche die disperse Phase strömt, koaleszenzfördernde Einsätze (32) angeordnet sind.

5. Zweiphasengegenstromapparat nach den Ansprüchen 1 bis 3, dadurch gekennzeichnet, daß an den Eintritts- bzw. Austrittsöffnungen (19) der Kanäle (15, 16) Leitbleche (28) angebracht sind.

6. Zweiphasengegenstromapparat nach den Ansprüchen 1 bis 3, dadurch gekennzeichnet, daß die Wände (26, 27) der Kolonneneinbauten (1) zickzackförmige Einprägungen oder Rippen (29) aufweisen, die an ihren Scheitelpunkten (30) miteinander verbunden sind.

7. Zweiphasengegenstromapparat nach den Ansprüchen 1 bis 6, dadurch gekennzeichnet, daß von einer der beiden Phasen durchströmte Kanäle (15) der Kolonneneinbauten (1) durch Ausgleichskanäle (31) miteinander verbunden sind.

## Claims

1. A two-phase countercurrent apparatus with a column including alternately arranged mixing zones (3, 12) and resting zones, wherein guide walls are present in the resting zones by which narrowing flow-through spaces with opposite flow directions are formed, characterized in that a plurality of guide walls (26, 27) inclined towards the longitudinal axis of the apparatus are provided over the cross section of the column for each of the two phases in order to form a plurality of channels (15, 16) that narrow in the flow direction of the respective phase and enter directly into the adjacent mixing zone.

2. A two-phase countercurrent apparatus according to claim 1, characterized in that common walls of the channels (15, 16) are formed by substantially plane plates (26) alternately oppositely inclined relative to the longitudinal axis of the column.

3. A two-phase countercurrent apparatus according to claim 1, characterized in that the plurality of channels (15, 16) is formed by a plurality of frustoconically designed plates (27) arranged coaxially to the longitudinal axis of the column with alternately opposite inclinations.

4. A two-phase countercurrent apparatus according to claims 1 to 3, characterized in that coalescence promoting inserts (32) are arranged in the channels (15) of the column installations (1) through which the dispersed phase flows.

5. A two-phase countercurrent apparatus according to claims 1 to 3, characterized in that guide plates (28) are provided at the entry and outlet openings (19) of the channels (15, 16).

6. A two-phase countercurrent apparatus according to claims 1 to 3, characterized in that the walls (26, 27) of the column installations (1) comprise zig-zag-shaped engravements or ribs (29), which are interconnected at their vertices (30).

7. A two-phase countercurrent apparatus according to claims 1 to 6, characterized in that channels (15) of the column installations through which one of the two phases flows are interconnected by equalizing channels (31).

**Revendications**

1. Appareil biphasique à contre-courant comportant une colonne qui contient alternativement des zones de mélange (3, 12) et des zones de repos, où des parois de guidage existent dans les zones de repos par lesquelles des espaces d'écoulement convergeant avec des directions d'écoulement opposées sont constitués, ledit appareil étant caractérisé en ce qu'une pluralité de parois de guidage (26, 27) inclinées par rapport à l'axe longitudinal de l'appareil sont disposées pour chacune des deux phases sur la section transversale de la colonne pour constituer une pluralité de canaux (15, 16) qui convergent dans la direction d'écoulement de la phase respective et débouchent directement dans la zone de mélange adjacente.

2. Appareil biphasique à contre-courant selon revendication 1, caractérisé en ce que des parois communes des canaux (15, 16) sont constituées par des tôles (26) sensiblement planes, présentant une inclinaison alternativement opposée par rapport à l'axe longitudinal de la colonne.

3. Appareil biphasique à contre-courant selon revendication 1, caractérisé en ce que la pluralité des canaux (15, 16) est constituée par une pluralité de tôles tronconiques (27) disposées coaxialement à l'axe longitudinal de la colonne avec une inclinaison alternativement opposée.

4. Appareil biphasique à contre-courant selon revendications 1 à 3, caractérisé en ce que des garnissages (32) favorisant la coalescence sont disposés dans les canaux (15) des dispositifs (1) dans lesquels circule la phase dispersée.

5. Appareil biphasique à contre-courant selon revendications 1 à 3, caractérisé par des déflecteurs (28) disposés sur les orifices d'entrée ou de sortie (19) des canaux (15, 16).

6. Appareil biphasique à contre-courant selon revendications 1 à 3, caractérisé en ce que les parois (26, 27) des dispositifs (1) présentent des empreintes ou nervures (29) en zig-zag, réunies par leurs sommets (30).

7. Appareil biphasique à contre-courant selon revendications 1 à 6, caractérisé en ce que les canaux (15) des dispositifs (1) parcourus par une des deux phases sont reliés par des canaux compensateurs (31).

FIG.1

FIG.3

FIG.2

0 048 239

FIG.4

FIG.5

FIG.6

FIG.7

FIG.8

2